# DEMANDE DE BREVET EUROPEEN

(11) **EP 1 193 832 A1**
(43) Date de publication de la demande: **03.04.2002**
(21) Numéro de dépôt: 01402276.8
(22) Date de dépôt: 31.08.2001
(51) Int. Cl.: H02K 5/14, H02K 5/15

(54) **Moteur électrique avec déverrouillage automatique des balais lors de l'assemblage**

(30) Priorité: 06.09.2000 FR 0011363
(71) Demandeur: Meritor Light Vehicle Systems-France, 45600 Sully sur Loire (FR)
(72) Inventeur: Mademba-Sy, Thierry, 14110 Conde-sur-Noireau (FR)
(74) Mandataire: Jacobson, Claude

(57) **Abrégé**

Moteur électrique comportant un rotor bobiné dont les enroulements sont alimentés par l'intermédiaire d'un collecteur, un stator comportant une carcasse cylindrique (30) dans laquelle est agencée une bague porte-balais (40), et un flasque d'extrémité (60) fixé à ladite carcasse, ladite bague supportant deux balais (50) d'alimentation électrique associés chacun à un organe élastique de pression (52), chacun des balais (50) et l'organe élastique (52) respectif étant déplaçables entre une position d'attente, préalable à l'assemblage complet du moteur, dans laquelle le balai (50) est écarté du collecteur, et une position de travail, dans laquelle le balai porte sur le collecteur et l'organe élastique (52) exerce un effort radial sur ledit balai dirigé vers le collecteur. Le flasque (60) comporte un organe en saillie (78) correspondant à chaque balai (50), adapté pour déplacer le balai (50) et l'organe élastique (52) respectif de leur position d'attente vers leur position de travail, lors de l'assemblage du flasque (60) sur la carcasse (30).

## Description

La présente invention concerne un moteur électrique, notamment à courant continu.

On connaît déjà dans l'état de la technique un certain nombre de moteurs électriques comportant un rotor bobiné dont les enroulements sont alimentés par l'intermédiaire d'un collecteur, un stator comportant une carcasse cylindrique dans laquelle est agencée une bague porte-balais au voisinage d'une extrémité de ladite carcasse, et un flasque d'extrémité fixé à ladite extrémité de la carcasse, ledit flasque étant pourvu d'un palier de roulement recevant le rotor, ladite bague supportant deux balais d'alimentation électrique associés chacun à un organe élastique de pression, chacun des balais et l'organe élastique respectif étant déplaçables entre une position d'attente, préalable à l'assemblage complet du moteur, dans laquelle le balai est écarté du collecteur, et une position de travail, dans laquelle le balai, par une face de contact, porte sur le collecteur et l'organe élastique exerce un effort radial sur une face d'appui du balai opposée à la face de contact tendant à presser ledit balai sur le collecteur.

Cependant, ces moteurs présentent un certain nombre d'inconvénients, notamment lors de l'assemblage des différentes pièces constituant le moteur.

En effet, les balais doivent être placés dans leur position de travail, où ils sont pressés contre le collecteur, uniquement en fin de phase d'assemblage, de sorte que la bague puisse être disposée autour du collecteur sans frottement des balais sur celui-ci. Pour cela, ils sont verrouillés de façon provisoire dans leur position d'attente, puis déverrouillés et placés dans leur position de travail en fin d'assemblage du moteur.

L'opération de déplacement des balais de leur position d'attente à leur position de travail nécessite l'utilisation de machines spécifiques destinées à appliquer, au travers de la carcasse, une pression de déverrouillage sur les balais, ou la mise en place préalable d'une bague de rétention des balais dans leur position d'attente, cette bague étant retirée en fin d'opération de montage.

Ces dispositions prévues sur les moteurs électriques connus ne sont pas entièrement satisfaisantes du fait du coût des machines de déverrouillage, ou du coût de fabrication des pièces prévues spécialement pour assurer le verrouillage provisoire des balais, et du fait du temps supplémentaire d'opération que cela représente.

Afin de remédier aux inconvénients précités, l'invention a pour objet un moteur électrique du type précité dont le flasque d'extrémité comporte un organe en saillie correspondant à chaque balai, adapté pour porter sur le balai et déplacer ledit balai et l'organe élastique respectif de leur position d'attente vers leur position de travail, lors de l'assemblage du flasque d'extrémité sur la carcasse.

Grâce à cette disposition, on réalise de façon automatique en fin d'assemblage du moteur, c'est-à-dire lorsque l'on monte le flasque d'extrémité sur la carcasse, le déverrouillage des balais et leur passage de leur position d'attente à leur position de travail.

Cette opération est réalisée sans outillage supplémentaire, sans pièce supplémentaire, mais également sans temps d'opération s'ajoutant au temps d'assemblage du moteur.

Suivant d'autres caractéristiques de l'invention :
- l'assemblage du flasque sur la carcasse est réalisé par au moins un mouvement relatif axial, et l'organe en saillie est un doigt axial présentant une rampe destinée à porter sur un bord du balai correspondant, et adaptée pour que le mouvement axial d'assemblage du flasque provoque un mouvement radial du balai vers sa position de travail ;
- l'assemblage du flasque sur la carcasse est réalisé par au moins un mouvement relatif rotatif, et l'organe en saillie est un doigt axial présentant une rampe destinée à porter sur un bord du balai correspondant, et adaptée pour que le mouvement rotatif d'assemblage du flasque provoque un mouvement radial du balai vers sa position de travail. ;
- le flasque est fixé sur la carcasse au moyen d'un dispositif à baïonnette ;
- l'organe élastique est un ressort spiralé comportant un bras d'extrémité qui, dans la position d'attente, est dégagé axialement de la face d'appui et précontraint axialement, de façon à se déplacer axialement jusque dans sa position de travail lors du déplacement radial du balai ;
- le bras d'extrémité porte, dans la position d'attente, sur une face sensiblement radiale du balai ; et
- le balai comporte sur sa face d'appui, une encoche adaptée pour recevoir et retenir le bras d'extrémité lorsque l'organe élastique et le balai sont dans leur position de travail.

L'invention vise également un dispositif d'entraînement d'un équipement de véhicule automobile, comportant un moteur électrique tel que décrit précédemment.

Des exemples de réalisation de l'invention vont maintenant être décrits en regard des dessins annexés, sur lesquels :
- la Figure 1 est une vue en perspective éclatée d'un moteur électrique de type connu ;
- la Figure 2 est une vue en perspective éclatée partielle d'un moteur électrique selon un premier mode de réalisation de l'invention ;
- les Figures 3A et 3B sont des demi-vues de section suivant la ligne 3-3 de l'ensemble représenté à la Figure 2, suivant le premier mode de réalisation de l'invention, respectivement en position pré-assemblée et en position d'assemblage complet du flasque d'extrémité sur la carcasse ;
- la Figure 4 est une vue en perspective à plus grande échelle, d'un flasque d'extrémité seul, suivant un deuxième mode de réalisation de l'invention ; et
- les Figures 5A et 5B sont des demi-vues de section suivant la ligne 5-5 indiquée à la Figure 4, analogues aux Figures 3A et 3B.

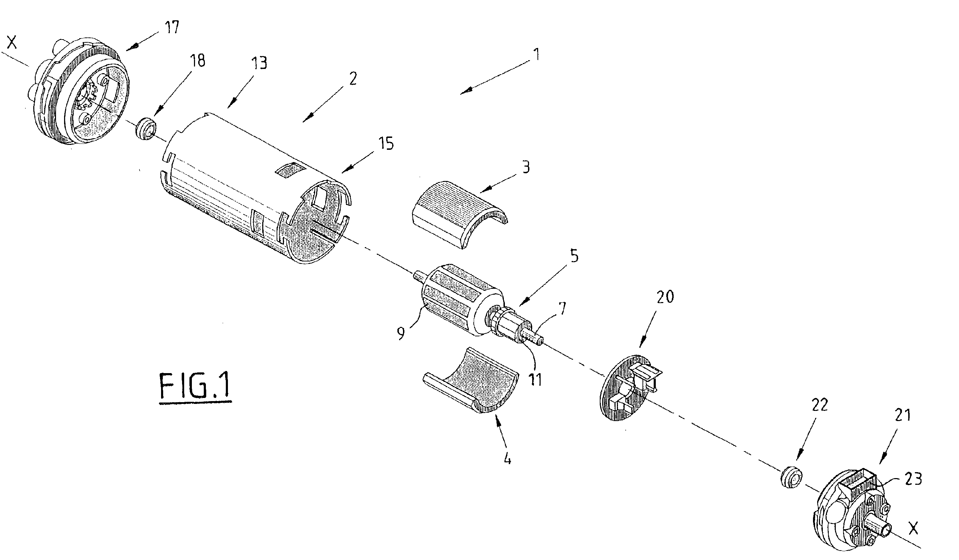

On reconnaît sur la Figure 1 la structure générale d'un moteur électrique à courant continu.

Ce moteur 1 comporte une carcasse 2 dans laquelle sont disposés des aimants permanents 3 et 4, et un rotor 5.

Le rotor 5 est notamment constitué d'un arbre 7 d'axe X-X présentant des enroulements d'induit 9 électriquement alimentés par l'intermédiaire d'un collecteur 11.

La carcasse 2 est de forme cylindrique à section circulaire, de même axe X-X que l'arbre 7 de rotor, et présente deux extrémités 13, 15 ouvertes.

L'extrémité arrière 13 de la carcasse 2 est adaptée pour recevoir un flasque arrière 17 muni d'un palier de guidage 18 de l'arbre de rotor 7.

L'extrémité avant 15 de cette carcasse 2 est quant à elle adaptée pour recevoir une bague porte-balais 20, et un flasque avant 21 également muni d'un palier de guidage 22 de l'arbre de rotor 7.

Le flasque avant 21 supporte un connecteur 23 d'alimentation électrique, et peut également être prévu pour recevoir des capteurs ou des cartes électroniques de commande du moteur.

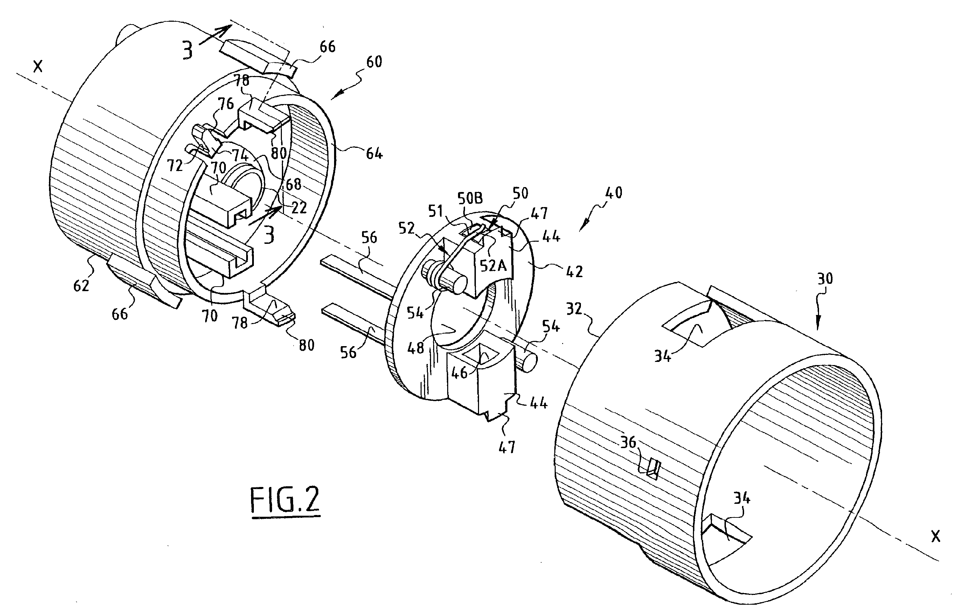

En référence à la Figure 2, on va maintenant décrire un moteur électrique suivant l'invention, en détaillant davantage la partie d'extrémité avant de la carcasse, la bague porte-balais et le flasque avant, les autres constituants décrits en référence à la Figure 1 n'étant pas directement concernés par l'invention et pouvant être choisis, pour réaliser l'invention, identiques à ceux connus dans l'état de la technique.

Un moteur suivant l'invention comprend une carcasse 30 dont on a représenté seulement un tronçon d'extrémité correspondant à l'extrémité avant 15 du moteur de l'état de la technique et représenté à la Figure 1. Cette carcasse 30 est de forme cylindrique d'axe X-X, et de section transversale annulaire. Elle présente, débouchant sur son extrémité libre 32 une lumière en L 34 dont une branche est axiale et débouche sur l'extrémité libre 32. Au voisinage de la lumière 34, la carcasse 30 comporte une fenêtre 36.

Une deuxième lumière 34, symétrique de la première suivant une symétrie axiale d'axe X-X, est formée dans la carcasse 30.

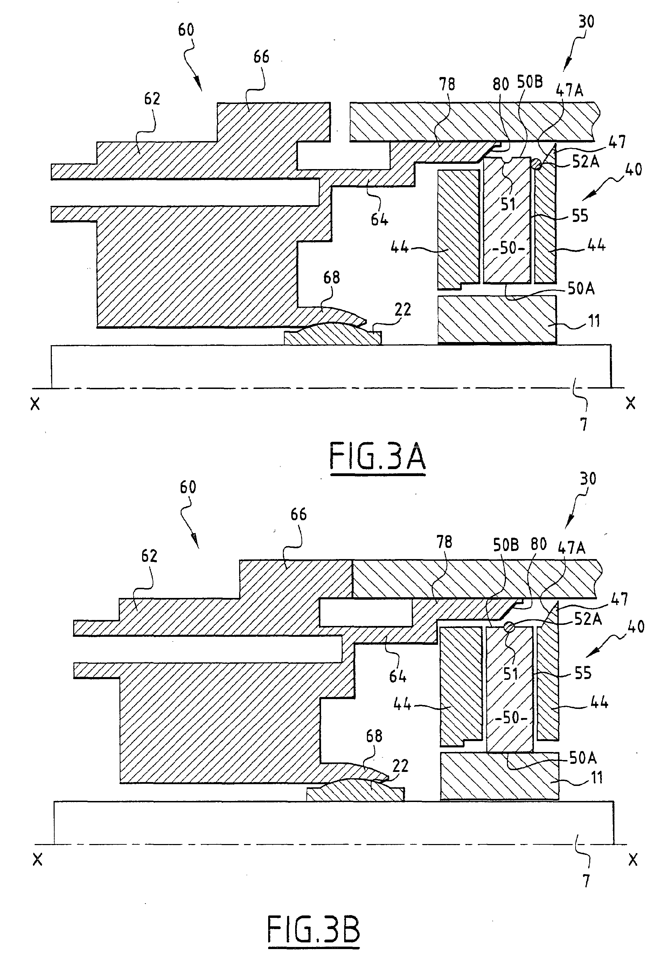

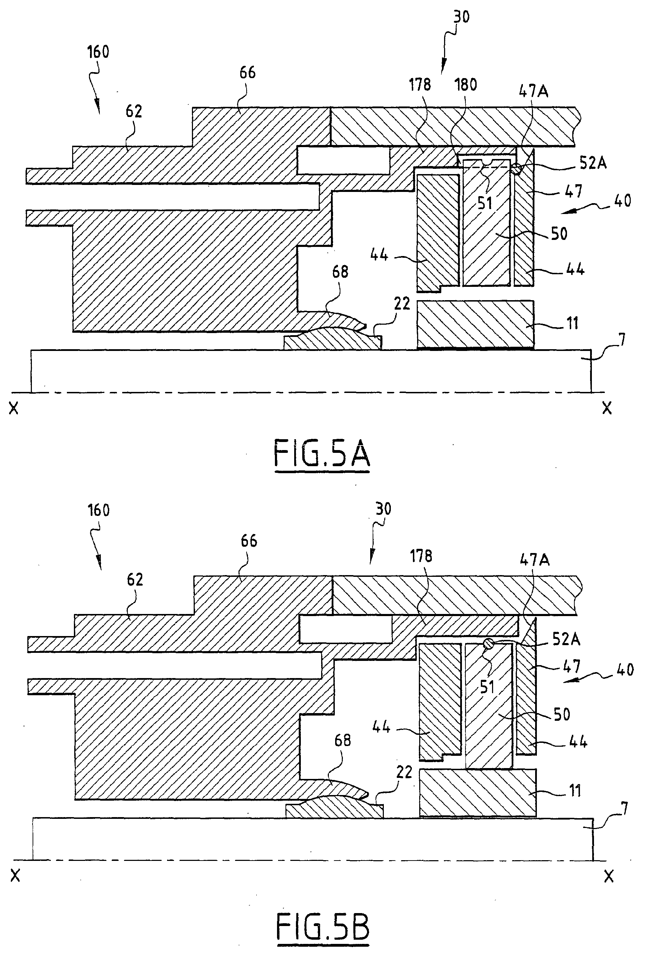

Une bague porte-balais 40 est destinée à être fixée dans la carcasse 30 par des moyens de fixation non représentés. La bague porte-balais 40 est formée d'un anneau 42 de section complémentaire de celle de la carcasse 30, l'anneau 42 supportant sur l'une de ses faces deux plots diamètralement opposés 44. Chaque plot 44 présente la forme générale d'un parallélépipède dans lequel est formé un canal 46 également parallélépipédique orienté radialement. Chaque plot 44 présente d'autre part une saillie sous la forme d'une dent radiale 47, dont une face 47A (référencée sur les Figures 3A, 3B, 5A et 5B) est inclinée en s'évasant depuis la sortie du canal 46, du côté opposé à la surface de l'anneau 42. Le trou central 48 de l'anneau 42 est destiné à recevoir le collecteur 11 du rotor 5, de façon que les canaux 46 débouchent sur la surface périphérique du collecteur 11 lorsque le moteur est assemblé. Chaque canal 46 reçoit un balai 50 complémentaire qui est destiné à porter sur le collecteur 11 par une face de contact 50A (référencée sur les Figures 3A, 3B, 5A et 5B). Une face d'appui 50B du balai 50, constituée par une face opposée à la face de contact 50A, présente une encoche 51 s'étendant suivant une direction périphérique.

Le bras 50 est associé à un organe élastique de pression 52 solidaire de l'anneau 42 par l'intermédiaire d'un pion de fixation respectif 54 formé d'une pièce avec l'anneau 42. L'organe élastique de pression 52 est un ressort spiralé enroulé autour du pion 54, et comporte un bras d'extrémité libre 52A destiné à porter soit sur une face radiale 55 (référencée sur les Figures 3A, 3B, 5A et 5B) du balai 50, située en regard de la face inclinée 47A de la dent 47, soit sur sa face d'appui 50B en coopérant avec l'encoche 51.

Sur la Figure 2, un seul des balais 50 et un seul des organes élastiques de pression 52 ont été représentés. L'anneau 42 supporte également des barrettes de connexion électrique 56 formées sur la face opposée de l'anneau 42 par rapport au plot 44, et constituant également des organes de guidage.

Les autres organes de liaison électrique associés aux balais 50 n'ont pas été représentés car il s'agit de dispositions classiques.

On a représenté enfin sur la Figure 2, un flasque avant 60 destiné à être fixé sur la carcasse 30.

Le flasque avant 60 présente deux manchons cylindriques coaxiaux, le premier 62 constituant un manchon extérieur et le deuxième 64 constituant un manchon intérieur.

Le manchon extérieur 62 présente deux pions de verrouillage 66 diamétralement opposés faisant saillie axialement du côté tourné vers la carcasse 30, ces pions étant de forme complémentaire de celles des lumières 34 de façon à coopérer avec elles.

Le flasque 60 comporte un moyeu 68 dans lequel est monté un palier 22 tel que décrit en référence à la Figure 1, destiné à recevoir à rotation l'arbre 7 du rotor 5.

Des rails de guidage 70 complémentaires des barrettes 56 font saillie axialement depuis le fond du flasque avant 60 et sont solidaires d'organes de connexion électrique femelles (non représentés) destinés à alimenter électriquement les balais 50 par l'intermédiaire des barrettes de connexion 56.

Dans le manchon intérieur 64 est formée une patte souple axiale 72 dont l'extrémité libre 74 est tournée vers la carcasse 30 et comporte un ergot radial 76 destiné à s'insérer dans la fenêtre 36 de la carcasse 30 après déformation élastique de la patte souple 72, en position d'insertion complète du pion de verrouillage 66 dans la lumière 34.

Les organes de verrouillage mâles formés par les pions de verrouillage 66 et l'ergot 76, et les organes femelles complémentaires respectifs formés par les lumières 34 et la fenêtre 36, constituent un ensemble de fixation à baïonnette, dans lequel la fixation du flasque avant sur la carcasse 30 est réalisée par enfichage axial des pions de verrouillage 66 dans les lumières 34, puis par rotation relative jusqu'à la position de butée des pions de verrouillage 66 en fond des lumières 34, cette position étant verrouillée par la coopération de l'ergot 76 avec la fenêtre 36.

Deux organes en saillie axiale 78 diamétralement opposés sont formés d'une pièce avec le manchon intérieur 64 et sont tournés vers la bague porte-balais 40. Du côté de la bague porte-balais 40, ces organes en saillie 78, qui sont destinés à coopérer avec les balais 50 respectifs, présentent une extrémité libre pourvue d'une rampe 80 inclinée par rapport à l'axe d'insertion des pions 66 dans les lumières 34, en étant tournée vers la bague porte-balais 40. La rampe 80 est ainsi adaptée pour que le mouvement d'insertion axiale du flasque 60 par rapport à la carcasse 30 actionne les balais 50 en translation radiale vers l'axe X-X.

On va maintenant décrire, en référence aux Figures 3A et 3B, le montage du flasque 60 sur la carcasse 30 et la mise en position de travail des balais 50.

Sur la Figure 3A, on a représenté l'ensemble formé par la carcasse 30, la bague porte-balais 40 et le flasque avant 60 en position pré-assemblée, c'est-à-dire préalablement à l'insertion du pion de verrouillage 66 dans la lumière 34. Dans cette position, les balais 50 sont en position d'attente écartée radialement par rapport à l'axe X-X, permettant le montage de la bague 40 sur l'arbre rotor 7 et le positionnement convenable de ladite bague 40 autour du collecteur 11. Les balais 50 sont maintenus dans cette position par des crans d'arrêt mécaniques classiques (non représentés) fournissant un faible effort de rétention. Le bras d'extrémité 52A de l'organe élastique de pression 52 est écarté axialement de sa position de repos de façon à être précontraint entre la face inclinée 47A de la dent 47 et la face radiale 55 du balai 50 placé en regard.

Lorsque le pion de verrouillage 66 est inséré dans la lumière 34, le mouvement axial relatif du flasque 60 par rapport à la carcasse 30 génère un appui de la rampe 80 de l'organe en saillie 78 sur une arête du balais 50, et ainsi son déplacement radial vers l'axe X-X et le collecteur 11. Le bras d'extrémité 52A de l'organe élastique de pression 52 est ensuite dégagé de la face 55 du balai 50 sur laquelle il portait, de sorte que ledit bras 52A prend une position axiale libre de contrainte axiale, cette position correspondant à l'engagement du bras 52A dans l'encoche 51 du balai. L'organe élastique de pression 52 assure alors un effort uniquement radial sur le balai 50, cet effort étant supérieur à l'effort de rétention assuré par le cran mécanique de maintien du balai en position d'attente, de sorte que le balai 50 est pressé sur le collecteur 11 dans sa position finale de travail.

Cette position de travail a été représentée à la Figure 3B.

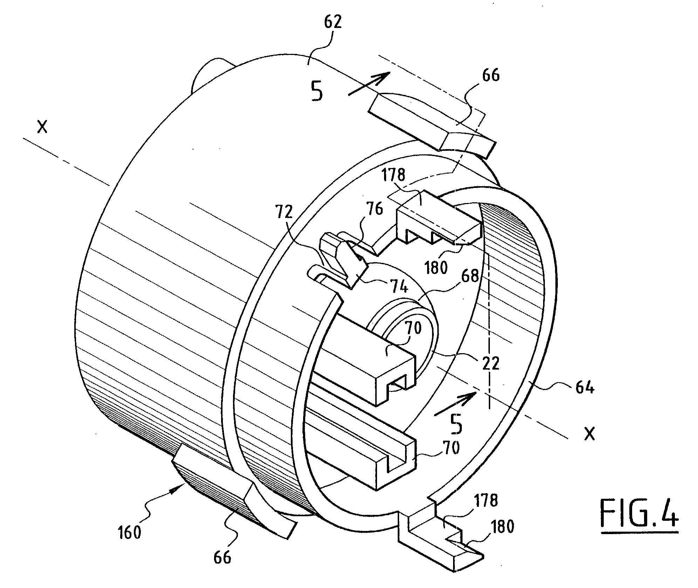

A la Figure 4, on a représenté, seul, un flasque avant 160 comportant un organe en saillie 178 dont la fonction est analogue à celle qui a été décrite en référence aux Figures 2, 3A et 3B, à la différence près qu'il comporte un rampe 180 inclinée par rapport à un plan tangent à un cylindre fictif de section circulaire et d'axe X-X, l'inclinaison étant définie par une rotation autour de l'axe défini par les points de tangence. De ce fait, c'est le mouvement rotatif d'assemblage du flasque 160 par rapport à la carcasse 30 qui génère, par appui de la rampe 180 sur une arête du balai 50, le déplacement radial du balai 50 vers sa position de travail en appui sur le collecteur 11.

On a représenté à la Figure 5A, la carcasse 30 et le flasque 160 en position de pré-assemblage, dans laquelle seule l'insertion axiale est réalisée, tandis que la Figure 5B illustre la position relative finale de ces mêmes pièces et de la bague porte-balais 40, en fin de mouvement de rotation relative.

L'invention qui vient d'être décrite dans ces deux modes de réalisation permet d'obtenir le passage des balais de leur position d'attente à leur position de travail sans opération supplémentaire par rapport à l'assemblage du moteur et sans recours à une pièce mécanique supplémentaire dédiée à la seule mise en position des balais.

Il en résulte un temps et un coût de fabrication et/ou d'assemblage, pour des moteurs de type visé par l'invention, réduits de façon sensible.

## Revendications

1. Moteur électrique comportant un rotor bobiné (5) dont les enroulements (9) sont alimentés par l'intermédiaire d'un collecteur (11), un stator comportant une carcasse cylindrique (30) dans laquelle est agencée une bague porte-balais (40) au voisinage d'une extrémité de ladite carcasse, et un flasque d'extrémité (60 ; 160) fixé à ladite extrémité de la carcasse (30), ledit flasque étant pourvu d'un palier de roulement (22) recevant le rotor (5), ladite bague (40) supportant deux balais d'alimentation électrique (50) associés chacun à un organe élastique de pression (52), chacun des balais (50) et l'organe élastique (52) respectif étant déplaçables entre une position d'attente, préalable à l'assemblage complet du moteur, dans laquelle le balai (50) est écarté du collecteur (11), et une position de travail, dans laquelle le balai (50), par une face de contact (50A), porte sur le collecteur (11) et l'organe élastique (52) exerce un effort radial sur une face d'appui (50B) du balai (50) opposée à la face de contact (50A) tendant à presser ledit balai sur le collecteur (11), **caractérisé en ce que** le flasque d'extrémité (60 ;160) comporte un organe en saillie (78 ;178) correspondant à chaque balai (50), adapté pour porter sur le balai et déplacer ledit balai (50) et l'organe élastique (52) respectif de leur position d'attente vers leur position de travail, lors de l'assemblage du flasque d'extrémité (60 ; 160) sur la carcasse (30).

2. Moteur électrique suivant la revendication 1, **caractérisé en ce que** l'assemblage du flasque (60) sur la carcasse (30) est réalisé par au moins un mouvement relatif axial, et l'organe en saillie (78) est un doigt axial présentant une rampe (80) destinée à porter sur un bord du balai (50) correspondant, et adaptée pour que le mouvement axial d'assemblage du flasque (60) provoque un mouvement radial du balai (50) vers sa position de travail.

3. Moteur électrique suivant la revendication 1, **caractérisé en ce que** l'assemblage du flasque (160) sur la carcasse (30) est réalisé par au moins un mouvement relatif rotatif, et l'organe en saillie (178) est un doigt axial présentant une rampe (180) destinée à porter sur un bord du balai (50) correspondant, et adaptée pour que le mouvement rotatif d'assemblage du flasque (160) provoque un mouvement radial du balai (50) vers sa position de travail.

4. Moteur électrique suivant la revendication 2 ou 3, **caractérisé en ce que** le flasque (60 ;160) est fixé sur la carcasse (30) au moyen d'un dispositif à baïonnette (34, 66).

5. Moteur électrique suivant l'une quelconque des revendications 2 à 4, **caractérisé en ce que** l'organe élastique (52) est un ressort spiralé comportant un bras d'extrémité (52A) qui, dans la position d'attente, est dégagé axialement de la face d'appui (50B) et précontraint axialement, de façon à se déplacer axialement jusque dans sa position de travail lors du déplacement radial du balai (50).

6. Moteur électrique suivant la revendication 5, **caractérisé en ce que** le bras d'extrémité (52A) porte, dans la position d'attente, sur une face sensiblement radiale (55) du balai (50).

7. Moteur électrique suivant la revendication 5 ou 6, **caractérisé en ce que** le balai (50) comporte sur sa face d'appui (50B), une encoche (51) adaptée pour recevoir et retenir le bras d'extrémité (52A) lorsque l'organe élastique (52) et le balai (50) sont dans leur position de travail.

8. Dispositif d'entraînement d'un équipement de véhicule automobile, **caractérisé en ce qu'**il comporte un moteur électrique suivant l'une quelconque des revendications 1 à 7.
